# EUROPÄISCHE PATENTSCHRIFT

(11) **EP 1 963 718 B1**
(45) Veröffentlichungstag und Bekanntmachung des Hinweises auf die Patenterteilung: **21.03.2012**
(21) Anmeldenummer: 06819644.3
(22) Anmeldetag: 21.11.2006
(51) Int. Cl.: F16H 61/24, F16C 11/04, F16C 21/00, F16C 19/46, F16C 19/54

(54) **Lagerungsanordnung mit einer Zusatzmasse**
Bearing arrangment with an additional mass
Système de palier avec une masse supplémentaire

(30) Priorität: 14.12.2005 DE 102005059702
(43) Veröffentlichungstag der Anmeldung: 03.09.2008
(73) Patentinhaber: Schaeffler Technologies AG & Co. KG, 91074 Herzogenaurach (DE)
(72) Erfinder: MEHLIS, Thomas, 91077 Kleinsendelbach (DE); KRÄMER, Klaus, 91460 Baudenbach (DE); LÖFFELMANN, Jochen, 96158 Frensdorf (DE)
(86) Internationale Anmeldenummer: PCT/EP2006/068697
(87) Internationale Veröffentlichungsnummer: WO 2007/068556

(56) Entgegenhaltungen:
- EP-A2- 0 828 097
- DE-U1- 8 803 045

## Beschreibung

### Gebiet der Erfindung

Die Erfindung betrifft eine schwenkbare Zusatzmasse und Lagerungsanordnung zur Lagerung der schwenk-baren Zusatzmasse an einem Gehäuse, wobei die Zusatzmasse mittels wenigstens zwei Radiallagern gegen senkrecht zur Mittelachse eines Bolzens gerichtete Radialkraftkomponenten um die Mittelachse schwenkbar auf dem Bolzen gelagert ist und dabei die Radiallager in der Zusatzmasse so aufgenommen sind, dass der Schwerpunkt der Zusatzmasse radial von der Mittelachse des Bolzens entfernt ist und wobei die Zusatzmasse mittels wenigstens einer Axialstütze zu dem Gehäuse abgestützt ist und dabei die Axialstütze Axialkraftkomponenten aufnimmt, die mit der Mittelachse gleichgerichtet sind.

### Hintergrund der Erfindung

Eine derartige Lagerungsanordnung ist in DE 101 38 729 A1und eine ähnliche ist in, EP 0 828 097 A2 beschrieben. Derartige mit den Schaltwellen von Schaltgetrieben gekoppelte Zusatzmassen sind oft separat zur Schaltwelle an dem Gehäuse eines Fahrzeuggetriebes oder an einem auf das Gehäuse des Getriebes aufgesetzten Hilfsgehäuse angeordnet. Die Lagerungsanordnungen des Standes der Technik weisen als Radiallager und auch als Axiallager Gleitlager auf. Die Lagerungsanordnungen sollten sowenig wie möglich Betriebsspiel aufweisen, damit den Schaltkomfort beeinträchtigende Schwingungen vermieden werden. Deshalb werden die Lagerungsanordnungen relativ schwergängig. Da die Zusatzmassen in der Regel außerhalb der eigentlichen Gehäuse der Getriebe angeordnet und nicht ver-kapselt sind, sind diese den Umgebungseinflüssen außerhalb des Getriebes ausgesetzt, verschmutzen relativ schnell und sind deshalb zusätzlich schwergängig. Die Betätigungseinrichtungen von modernen Schaltgetrieben sollten jedoch leichgängig sein.

DE zu 03 045 Ul zeigt eine Lagerungsanordnung eines Drehgelenks zur Lagerung einer um eine Mittelachse schwenkbaren Arm auf einem Bolzen mittels zwei als Wälzlager ausgeführte Radiallagern gegen senkrecht zur Mittelachse eines Bolzens gerichtete Radialkraftkomponenten. .Die Lagerung weist eine Axiaistütze auf, die Axialkraftkomponenten aufnimmt, die mit der Mittelachse gleichgerichtet sind.

### Zusammenfassung der Erfindung

Die Aufgabe der Erfindung ist es daher, Lagerungsanordnungen zu schaffen, mit denen die zuvor genannten Nachteile vermieden werden.

Diese Aufgabe ist nach dem Gegenstand des Anspruches 1 und weiterer abhängiger Ansprüche gelöst.

Die Radiallager sind Wälzlager, wie Kugellager oder Zylinderrollenlager aber vorzugsweise Nadellager. Die Lagerungen sind aufgrund der Rollreibung leichtgängig. Nadellager beanspruchen aufgrund des geringen Durchmessers der Nadeln wenig radialen Bauraum. Die Nadeln der Nadellager sind wahlweise vollrollig ausgeführt oder im Käfig geführt. Vollrollig ausgeführte Lager sind Lager, in denen die Wälzkörper ohne Käfig geführt sind. Die Lagerungsanordnung ist aufgrund der geringen Wälzreibung leichtgängig.

Die Laufbahnen der Lager sind Innenringe und oder Außenringe oder die Oberflächen des Bolzens bzw. die Oberfläche der Bohrung in der Zusatzmasse. Die Außenringe und Innenringe sind vorzugsweise dünnwandige, spanlos durch Kaltumformen hergestellte Hülsen.

. Die Zusatzmasse stützt sich über die Seitenborde jeweils eines der Radiallager auf der Axial-stütze und sich somit über den Bolzen an dem Gehäuse ab. Die Zusatzmasse ist dadurch axial schwebend auf dem Bolzen gelagert.

Die Axialstütze wirkt zweiseitig axial. Da der Bolzen in der Regel senkrecht zur Erdhorizontalen ausgerichtet ist, wirkt die Axialstütze hauptsächlich gegen Gewichtskräfte und Momente sowie gegen Beschleunigungskräfte und Schwingungen - stützt aber auch bei Erschütterungen und Verschiebungen in zur Schwerkraft entgegengesetzte axiale Richtung ab. Selbstverständlich wirkt die Lagerungsanordnung auch, wenn die Mittelachse des Bolzens mit der Horizontalen oder schräg zur Horizontalen ausgerichtet ist.

Die Axialstütze ist beispielsweise als Wellenabsatz einteilig mit oder wahlweise auch separat zu dem Bolzen ausgebildet. Separat an dem Bolzen befestigte Axialstützen sind zum Beispiel Stifte, Ringe oder Scheiben, die aufgepresst, angeschweißt oder auf andere geeignete Art befestigt sind. Eine Ausgestaltung der Erfindung sieht vor, dass die Axialstütze ein Sicherungsring ist. Der Sicherungsring ist beispielsweise ein handelsübliches Normteil und ist in eine entsprechende Umfangsnut des Bolzens eingeschnappt. Denkbar ist auch der Einsatz von Zackenringen oder ähnlicher Ringe, die sich in der Oberfläche des Bolzens festkrallen.

Eine weitere Ausgestaltung der Erfindung sieht vor, dass die Radiallager zumindest an den nach außen gerichteten Stirnseiten, d.h. an den voneinander weg gewandten Seiten abgedichtet sind. Da die einander zugewandten Seiten der Lager in der Nabe stecken, sind diese durch die Nabe der Zusatzmasse gekapselt. Für den Fall, dass die Nabe zweiteilig ausgebildet ist, ist alternativ auch eine beidseitige Abdichtung der Radialwälzlager vorgesehen.

Die erfindungsgemäße Lagerungsanordnung ist einfach und kostengünstig herzustellen und beansprucht wenig Bauraum, da im wesentlichen dünnwandige Blechteile und eine einfache Anordnung vorgesehen sind. Die Lagerungsanordnung ist mit Zusatzmasse beim Hersteller der Lagerungsanordnung vormontierbar. Der Aufwand für die Lagerung und Transport ist reduziert.

Eine weitere Ausgestaltung der Erfindung sieht vor, dass der Bolzen zumindest an einem Ende nicht direkt in einer Aufnahme des Gehäuses sitzt, sondern von einer Hülse umgriffen ist. Die der äußeren Kontur des Bolzens angepasste Hülse umfasst den Bolzen und ist in einer Aufnahme des Gehäuses radial zumindest abgestützt. Das Ende des Bolzens ist beispielsweise ein Vierkantprofil oder weist bevorzugt einen zylindrischen Sitz auf. Durch den Einsatz einer derartigen Hülse ist die Montage der Lagerungsanordnung vereinfacht, insbesondere dann, wenn die Lagerungsanordnung im wesentlichen als Baugruppe montiert wird. Der radial ausgerichtete Außendurchmesser der Hülse ist vorzugsweise größer als ein beliebiger größter gleichgerichteter Außendurchmesser des Bolzens.

Wenn die äußeren Abmessungen der Hülse größer sind, als die größten Au-βenabmessungen der Radiallager, ist es möglich, eine Einheit aus Bolzen und Radial- sowie Axialstütze durch die Aufnahme ins Gehäuse einzuführen. Anschließend wird die Hülse auf das Ende des Bolzens und gleichzeitig in die Aufnahme montiert.

Weitere Ausgestaltungen der Erfindung sind auf eine einfache Montage der Lagerungsanordnung mit Zusatzmasse als Baugruppe gerichtet. Der Bolzen ist mit einem Ende in oder an dem Gehäuse befestigt und ragt mit dem anderen Ende frei ab.

Der Bolzen ist, wie eine weitere Ausgestaltung vor sieht, mit einem Ende in einer schlitzförmigen Aufnahme aufgenommen, so dass die Baugruppe zunächst mit Bolzen aus einer Richtung quer zur Mittelachse des Bolzens in die schlitzartige Ausnehmung eingeführt und dann der Bolzen mit einem Ende in das Loch eingepresst wird.

### Kurze Beschreibung der Zeichnungen

Die Erfindung wird nachfolgend anhand von Ausführungsbeispielen näher erläutert. Es zeigen:
- Figur 1: eine Lagerungsanordnung mit der ein einarmig angelenktes Schaltgewicht gelagert ist,
- Figur 2: die Lagerungsanordnung nach Figur 1 im Detail in einem vergrö-βert dargestellten Längsschnitt,
- Figur 3: eine weitere Lagerungsanordnung zur Lagerung einer Zusatzmasse in einer räumlichen und längs geschnittenen Ansicht,
- Figur 4: eine Lagerungsanordnung mit einer zweiarmig angelenkten Zusatzmasse und mit einer geteilten Nabe im Längsschnitt
- Figur 5: die Lagerungsanordnung nach Figur 4 im Detail in einem vergrö-βert dargestellten Längsschnitt
- Figur 6: eine Lagerungsanordnung, bei der Bolzen einseitig an einem Gehäuse befestigt ist und
- Figur 7: die Lagerungsanordnung nach Figur 6 im Detail in einem vergrö-βert dargestellten Längsschnitt.

### Detaillierte Beschreibung der Zeichnung

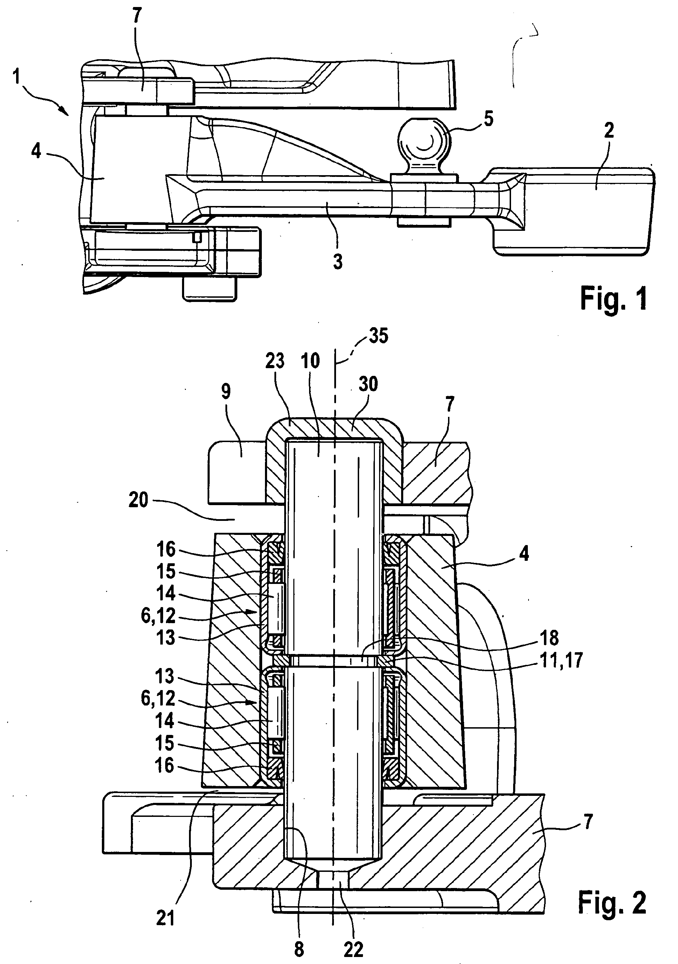

Die Bauteile die in der nachfolgenden Beschreibung der Figuren 1 bis 7 die gleichen Bezugszeichen aufweisen, sind hinsichtlich der Bauweise und/oder hinsichtlich der Funktion in allen beschriebenen Ausführungsbeispielen gleich.

Die Figuren 1 und 2 zeigen ein Ausführungsbeispiel einer Lagerungsanordnung 1. Die Lagerungsanordnung 1 ist für die schwenkbare Lagerung einer Zusatzmasse 2 an einem Gehäuse 7. Von dem Gehäuse 7 ist nur die Umgebung des Loches 8 und der Ausnehmung 9 zeichnerisch dargestellt. Die Zusatzmasse 2 ist an einem Ausleger 3 fest, der von einer Nabe 4 der Lagerungsanordnung 1 abgeht. An dem Ausleger 3 ist ein Kugelkopf 5 für eine Verbindung mit einem nicht dargestellten Schaltelement befestigt. Die Lagerungsanordnung 1 ist aus der Nabe 4, aus Radiallagern 6, aus einem Bolzen 10, einer Hülse 23, aus dem Loch 8, der Ausnehmung 9 und aus einer Axialstütze 11.

Die Radiallager 6 sind Wälzlager in Form von Nadellagern 12. Das Nadellager12 ist aus einer Nadelhülse 13 und aus Nadeln 14 gebildet. Die Nadeln 14 eines jeden der Radiallager 6 sind in einem Käfig 15 geführt. Außerdem weist jedes Radiallager 6 eine Dichtung 16 auf. Die Laufbahnen der Radiallager 6 sind durch die Oberfläche des Bolzens 10 gebildet.

Der Bolzen 10 sitzt fest in dem Loch 8 und ist in der Ausnehmung 9 über die Hülse 23 gehalten. Die Radiallager 6 sitzen fest in der Nabe 4 und lagern die Zusatzmasse 2 schwenkbar auf dem Bolzen 10. Die Axialstütze 11 ist ein Sicherungsring 17, der in eine Ringnut 18 des Bolzens 10 eingreift. Das Gewicht der gesamten Zusatzmasse 2, die Wirkungen des Auslegers 3 als Hebel von der Mittelachse 35 zum Schwerpunkt der Zusatzmasse 2 zuzüglich des Gewichts der zur Zusatzmasse gehörenden Nabe 4 sowie des der Lagerung und auch weiterhin die Kräfte aus Stößen und Erschütterungen auf das System werden axial durch die im Bild nach oben weisende Flanke des Sicherungsringes 17 gestützt. In die Gegenrichtung ist die Zusatzmasse 2 ebenfalls mittels des Sicherungsringes 17 verliersicher auf dem Bolzen 10 gestützt, wenn axiale Kräfte die Zusatzmasse 2 in diese Richtung verschieben. Stirnseitig der Nabe 4 und dem Gehäuse 7 sind Spalte 20 und 21 ausgebildet, so dass die Zusatzmasse 2 zum Gehäuse 7 berührungsfrei schwenkbar an der Axialstütze 11 aufgehängt ist.

Jedes der Radiallager 6 ist einseitig zu der Seite hin abgedichtet, die in der Lagerungsanordnung 1 Umgebungseinflüssen ausgesetzt ist. In diesem Fall sind dies die voneinander abgewandten Stirnseiten der Radiallager 6 durch die Nabe 4 nicht verdeckt sind. Die Hülse 23 ist kappenartig ausgebildet und deckt mit dem Boden 30 den Bolzen 10 in eine axiale Richtung ab.

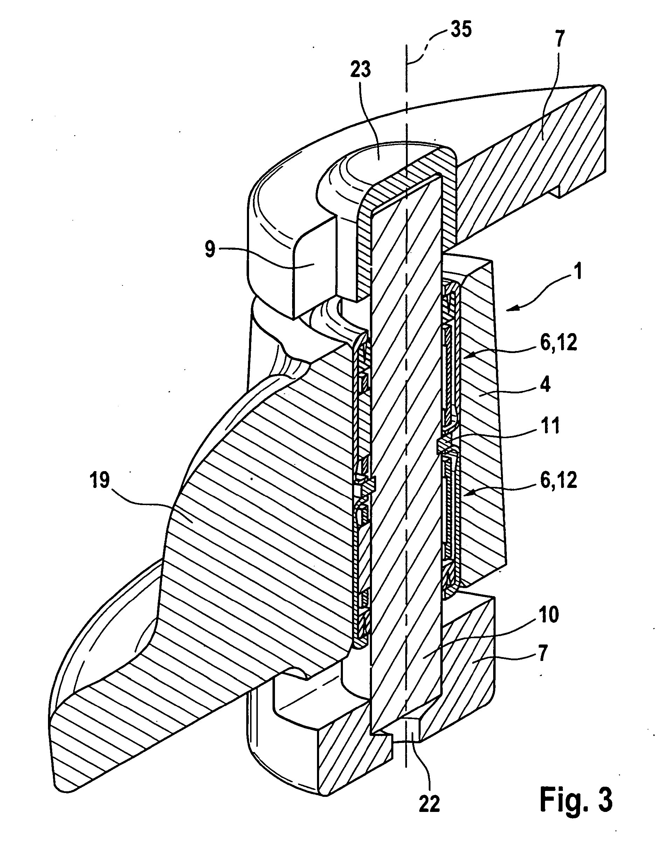

Figur 3 zeigt die Lagerungsanordnung 1 mit der in diesem Fall eine Zusatzmasse 19 an dem Gehäuse 7 gelagert ist. Die Zusatzmasse 19 ist massiv mit Nabe ausgebildet und mittels des Bolzens 10 und der Hülse 23, der Axialstütze 11, mittels der Nadellager 12 an dem Gehäuse 7 gelagert. Insbesondere aus Figur 3 ist ersichtlich, dass die Ausnehmung 9 schlitzförmig ist und dass der Schlitz in die mit der Schnittebene gleichgerichteten radialen Richtungen länger ist, als der Schlitz in die anderen radialen Richtungen breit ist. Von der Ausnehmung 9 ist in Figur 3 durch den Längsschnitt eine spiegelbildliche Hälfte abgebildet. Für den Sitz der Hülse 23 in der Ausnehmung 9 ist zwischen der Hülse 23 und der Ausnehmung 9 berührungsseitig eine Press- bzw. Übergangspassung vorgesehen, für die die Breite des Schlitzes der Ausnehmung 9 und der Außendurchmesser der Hülse 23 das gleiche Nennmaß aufweisen. Das Loch 8 geht in eine Entlüftungsöffnung 22 über, durch die beim Einpressen des Bolzens 10 verdrängte Luft entweichen kann.

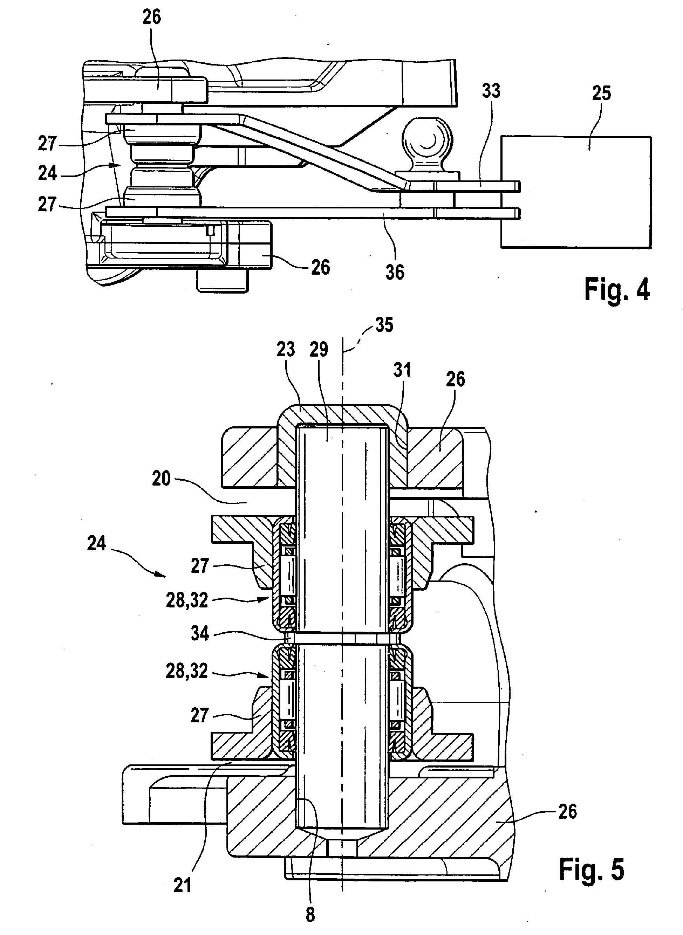

Die Figuren 4 und 5 zeigen eine Lagerungsanordnung 24, mit der eine Zusatzmasse 25 an einem Gehäuse 26 gelagert ist. Die Lagerungsanordnung 24 ist aus zwei separaten kalt geformten Nabenteilen 27 aus Blech mit jeweils einem Radiallager 28, aus einem Bolzen 29 und aus den Löchern 8 und 31 gebildet. Von dem Gehäuse 26 sind nur die Abschnitte um die Löcher 8 und 31 abgebildet. In jedem der topfartig ausgebildeten Nabenteile 27 sitzt als Radiallager 28 ein Wälzlager in Form eines vollrollig ausgebildeten und beidseitig abgedichteten Nadellagers 32.

Der Bolzen 29 sitzt mit einem Ende fest in dem Loch 8. Auf dem anderen Ende sitzt die Hülse 23. Die Hülse 23 sitzt fest in dem Loch 31. Die Radiallager 28 lagern die Zusatzmasse 25 schwenkbar auf dem Bolzen 29. Dazu ist jedes der Nabenteile 27 über jeweils einen Ausleger 33 bzw. 36 als Blechstanzteil mit der Zusatzmasse 25 verbunden. Die Axialstütze 11 ist ein Wellenabsatz 34 an dem Bolzen 29. Das Gewicht der Ausleger 33 und 36, der Nabenteile 27 und des der Radiallagers 28 geht in das Gesamtgewicht der gesamten Zusatzmasse 25 ein. Dieses Gewicht, die Hebelwirkung aus dem Abstand des Massenschwerpunktes zur Mittelachse 35 sowie die Kräfte aus Stößen und Erschütterungen auf das System werden axial durch die im Bild nach oben weisende Flanke des Wellenabsatzes 34 gestützt. In die Gegenrichtung ist die Zusatzmasse 25 ebenfalls mittels des Wellenabsatzes 34 verliersicher auf dem Bolzen 29 gehalten und an dem Wellenabsatz 34 dann abgestützt, wenn die Zusatzmasse 25 in diese Richtung verschoben wird. Stirnseitig des jeweiligen Nabenteils 27 und dem Gehäuse 7 sind Spalte 20 und 21 ausgebildet, so dass die Zusatzmasse 25 zum Gehäuse 7 berührungsfrei schwenkbar an der Axialstütze 11 aufgehängt ist.

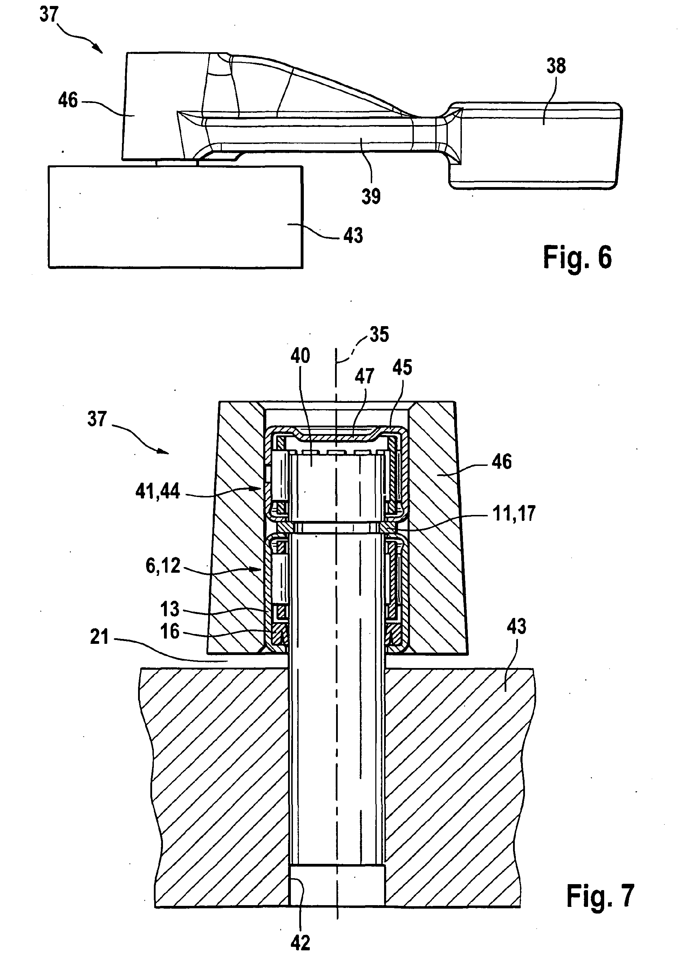

In Figur 6 und 7 ist eine Lagerungsanordnung 37 dargestellt, mittels der eine Zusatzmasse 38 an einem Ausleger 39 radial und axial an einem Gehäuse 43 schwenkbar gelagert ist. Die Lagerungsanordnung 37 weist einen Bolzen 40, ein Radiallager 6 sowie ein Radiallager 41, eine Axialstütze 11 und ein Loch 42 auf. Der Bolzen 40 ist einseitig in dem Loch 42 an dem Gehäuse 43 gehalten. Von dem Gehäuse 43 ist nur die Umgebung des Lochs 42 dargestellt. Die Radiallager 6 und 41 sind Wälzlager in Form des Nadellagers 12 und eines Nadellagers 44 und sitzen in der Nabe 46 sowie auf dem Bolzen 40.

Die Nabe 46 als Teil der Zusatzmasse 38 ist mittels der Radiallager 6 und 44 radial auf dem Bolzen 40 gelagert. Die Nadelhülse des Nadellagers 44 ist als Nadelbüchse 45 ausgebildet, dass heißt, an einer Seite mit einen Boden 47 versehen. Die Nadelbüchse 45 ist dem Loch 42 gegenüber auf den Bolzen 40 gestülpt sowie in die Nabe 46 eingepresst und verschließt mit dem Boden 47 die Lagerungsanordnung 37 an einer Seite der Nabe 46. An der gegenüberliegenden Seite ist die Lagerungsanordnung 37 mittels der Dichtung 16 in der Nadelhülse 13 abgedichtet.

Die Axialstütze 11 in Form des Sicherungsrings 17 ist axial zwischen den Radiallagern 6 und 44 angeordnet. Das Gewicht der Zusatzmasse 38 und der Radiallager 6, 44 sowie die Hebelwirkungen aus Gewicht und Schwingungen sind in Schwerkraftrichtung an dem Sicherungsring 17 axial über das Radiallager 44 abgestützt. In die entgegengesetzte axiale Richtung ist die Zusatzmasse 38 über das Radiallager 6 an dem Gehäuse 43 axial dann abgestützt, wenn die Zusatzmasse 38 in diese Richtung verschoben wird. Stirnseitig des Teils der Nabe, der im Bild dem Gehäuse 43 zugewandt ist, ist ein Spalt 47 ausgebildet, so dass die Zusatzmasse 38 zum Gehäuse 43 berührungsfrei schwenkbar an der Axialstütze 11 aufgehängt ist.

### Bezugszeichen

- 1: Lagerungsanordnung
- 2: Zusatzmasse
- 3: Ausleger
- 4: Nabe
- 5: Kugelkopf
- 6: Radiallager
- 7: Gehäuse
- 8: Loch
- 9: Ausnehmung
- 10: Bolzen
- 11: Axialstütze
- 12: Nadellager
- 13: Nadelhülse
- 14: Nadel
- 15: Käfig
- 16: Dichtung
- 17: Sicherungsring
- 18: Ringnut
- 19: Zusatzmasse
- 20: Spalt
- 21: Spalt
- 22: Entlüftungsöffnung
- 23: Hülse
- 24: Lagerungsanordnung
- 25: Zusatzmasse
- 26: Gehäuse
- 27: Nabenteil
- 28: Radiallager
- 29: Bolzen
- 30: Boden
- 31: Loch
- 32: Nadellager
- 33: Ausleger
- 34: Wellenabsatz
- 35: Mittelachse
- 36: Ausleger
- 37: Lagerungsanordnung
- 38: Zusatzmasse
- 39: Ausleger
- 40: Bolzen
- 41: Radiallager
- 42: Loch
- 43: Gehäuse
- 44: Nadellager
- 45: Nadelbüchse
- 46: Nabe
- 47: Boden

## Patentansprüche

1. Schwenkbare Zusatzmasse und Lagerungsanordnung (1, 24, 37) zur Lagerung der schwenkbaren Zusatzmasse (2, 19, 25, 38) an einem Gehäuse (7, 26, 43) wobei die Zusatzmasse (2, 19, 25, 38) mittels wenigstens zwei Radiallagern (6, 28, 41) gegen senkrecht zur Mittelachse (35) eines Bolzens (10, 29, 40) gerichtete Radialkraftkomponenten um die Mittelachse (35) schwenkbar auf dem Bolzen (10, 29, 40) gelagert ist und dabei die Radiallager (6, 28, 41) in der Zusatzmasse (2, 19, 25, 38) so aufgenommen sind, dass der Schwerpunkt der Zusatzmasse (2, 19, 25, 38) radial von der Mittelachse (35) des Bolzens (10, 29, 40) entfernt ist und wobei die Zusatzmasse (2, 19, 25, 38) mittels wenigstens einer Axialstütze (11) zu dem Gehäuse (7, 26, 43) abgestützt ist und dabei die Axialstütze (11) Axialkraftkomponenten aufnimmt, die mit der Mittelachse (35) gleichgerichtet sind, dadurch gekennzeichnnet, dass die Radiallager (6, 28, 41) als Walzlager aus gebildet sind, dass sich die A-xialstütze (11) axial zwischen den Radiallagern (6, 28, 41) an die Radiallager (6, 28, 41) anschließt, und dass die Zusatzmasse axial über die Seitenborde jeweils eines der Radiallager auf der Axialstütze (11) und über die an dem Bolzen (10, 29, 40) abgestützte Axialstütze (11) und über den an dem Gehäuse (7, 26, 43) abgestützten Bolzen (10, 29, 40) an dem Gehäuse (7, 26, 43) abgestützt ist.

2. Lagerungsanordnung nach Anspruch 1, **dadurch gekennzeichnet, dass** die Wälzlager Nadellager (12, 32, 44) sind.

3. Lagerungsanordnung nach Anspruch 1, **dadurch gekennzeichnet, dass** die Axialstütze (11) einteilig mit dem Bolzen (29) ausgebildet ist.

4. Lagerungsanordnung nach Anspruch 3, **dadurch gekennzeichnet, dass** die Axialstütze (11) ein Wellenabsatz (34) mit wenigstens einer in axiale Richtung weisenden Flanke des Wellenabsatzes (34) ist, wobei das Radiallager (28) an der Flanke abgestützt ist.

5. Lagerungsanordnung nach Anspruch 1, **dadurch gekennzeichnet, dass** die Axialstütze (11) an dem Bolzen (10, 40) befestigt ist.

6. Lagerungsanordnung nach Anspruch 5, **dadurch gekennzeichnet, dass** die Axialstütze (11) ein Sicherungsring (17) ist, wobei der Sicherungsring (17) in eine Ringnut in dem Bolzen (10, 40) eingreift.

7. Lagerungsanordnung nach Anspruch 1, **dadurch gekennzeichnet, dass** zumindest eines der Wälzlager an einer von dem anderen der Wälzlager axial weg weisenden Seite abgedichtet ist.

8. Lagerungsanordnung nach Anspruch 1, **dadurch gekennzeichnet, dass** der Bolzen (10, 29, 40) zumindest an einem Ende von einner Hülse (23, 45) umgriffen ist.

9. Lagerungsanordnung nach Anspruch *8*, **dadurch gekennzeichnet, dass** die Hülse (23) in einer Aufnahme (9) für den Bolzen (10, 29,) in dem Gehäuse (7) radial zumindest teilweise zwischen dem Bolzen (10, 29) und dem Gehäuse (7) angeordnet ist, so dass der Bolzen (10, 29) zumindest radial über die Hülse (23) in dem Gehäuse (7) abgestützt ist.

10. Lagerungsanordnung nach Anspruch 8, **dadurch gekennzeichnet, dass** die Hülse (23, 45) kappenartig mit Boden (30, 47) ausgebildet und über ein Ende des Bolzens (10, 29, 40) gestülpt ist, wobei der Boden (30, 47) den Bolzen (10, 29, 40) endseitig axial abdeckt.

11. Lagerungsanordnung nach Anspruch 8, **dadurch gekennzeichnet, dass** der radial ausgerichtete Außendurchmesser der Hülse (23, 45) größer ist als ein beliebiger größter gleichgerichteter Außendurchmesser des Bolzens(10, 29, 40).

12. Lagerungsanordnung nach Anspruch 1, **dadurch gekennzeichnet, dass** der Bolzen (10, 29, 40) zumindest mit einem axiallen Ende axial in einem Loch (8, 31, 42) des Gehäuses (7, 26, 43) steckt.

13. Lagerungsanordnung nach Anspruch 12 **dadurch gekennzeichnet, dass** der Bolzen (10, 29, 40) in das Loch (8, 31, 42) eingepresst ist.

14. Lagerungsanordnung nach Anspruch 12, **dadurch gekennzeichnet, dass** der Bolzen (10) mit einem anderen von dem Loch (8) entfernten Ende in einer zumindest teilweise schlitzförmig ausgebildeten Aufnahme (9) zumindest in zwei zueinander entgegengesetzte radiale Richtungen abgestützt ist, wobei die Abmessung der Aufnahme (9) in die entgegengesetzten Richtungen mit der gleichgerichteten radialen Abmessung des in der Aufnahme (9) abgestützten Endes im Nennmaß übereinstimmt.

15. Lagerungsanordnung nach Anspruch 13, **dadurch gekennzeichnet, dass** die radiale Abmessung der Aufnahme quer zu den radialen Richtungen, in die der Bolzen (70) in der Aufnahme abgestützt ist, größer ist als die radiale Abmessung der Aufnahme in die zueinander entgegengesetzten radialen Richtungen, in die der Bolzen (10) abgestützt ist.

16. Lagerungsanordnung nach Anspruch 12, **dadurch gekennzeichnet, dass** der Bolzen (10, 29) zumindest an einem Ende von einer Hülse umgriffen ist, wobei die Hülse in einer schlitzförmig ausgebildeten Aufnahme des Bolzens (10, 29) in dem Gehäuse radial zumindest teilweise zwischen dem Bolzen (10, 29) und dem Gehäuse angeordnet ist, so dass der Bolzen (10, 29) zumindest radial über die Hülse in dem Gehäuse abgestützt ist, wobei die Abmessung der Aufnahme in die zueinander entgegengesetzten radialen Richtungen mit dem Außendurchmesser der Hülse im Nennmaß übereinstimmt.

17. Lagerungsanordnung nach Anspruch 1, **dadurch gekennzeichnet, dass** die Wälzlager in einer nabenartig ausgebildeten Umhausung (4, 27, 46) aufgenommen sind, wobei die Umhausung mit wenigstens einem Ausleger mit der Zusatzmasse (2, 19, 25, 38) verbunden ist.

18. Lagerungsanordnung nach Anspruch 16 17, **dadurch gekennzeichnet, dass** die Umhausung (27) zweiteilig ausgebildet ist, wobei jeweils eines der wälzlager (28) in einem innen hohlzylindrischen separaten Abschnitt der Umhausung aufgenommen ist.

## Claims

1. Pivotable additional mass and bearing arrangement (1, 24, 37) for mounting the pivotable additional mass (2, 19, 25, 38) on a housing (7, 26, 43), the additional mass (2, 19, 25, 38) being mounted by means of at least two radial bearings (6, 28, 41), against radial force components directed perpendicularly to the mid-axis (35) of a bolt (10, 29, 40), on the bolt (10, 29, 40) pivotably about the mid-axis (35), and the radial bearings (6, 28, 41) in this case being received in the additional mass (2, 19, 25, 38) such that the centre of gravity of the additional mass (2, 19, 25, 38) is radially remote from the mid-axis (35) of the bolt (10, 29, 40), and the additional mass (2, 19, 25, 38) being supported with respect to the housing (7, 26, 43) by means of at least one axial support (11), and the axial support (11) in this case absorbing axial force components which are codirectional with the mid-axis (35), **characterized in that** the radial bearings (6, 28, 41) are designed as rolling bearings, **in that** the axial support (11) is adjacent to the radial bearings (6, 28, 41) axially between the radial bearings (6, 28, 41), and **in that** the additional mass is supported axially on the axial support (11) via the lateral rims of one of the radial bearings in each case and is supported on the housing (7, 26, 43) via the axial support (11) supported on the bolt (10, 29, 40) and via the bolt (10, 29, 40) supported on the housing (7, 26, 43).

2. Bearing arrangement according to Claim 1, **characterized in that** the rolling bearings are needle bearings (12, 32, 44).

3. Bearing arrangement according to Claim 1, **characterized in that** the axial support (11) is formed in one part with the bolt (29).

4. Bearing arrangement according to Claim 3, **characterized in that** the axial support (11) is a shaft shoulder (34) with at least one axially pointing flank of the shaft shoulder (34), the radial bearing (28) being supported on the flank.

5. Bearing arrangement according to Claim 1, **characterized in that** the axial support (11) is fastened to the bolt (10, 40).

6. Bearing arrangement according to Claim 5, **characterized in that** the axial support (11) is a securing ring (17), the securing ring (17) engaging into an annular groove in the bolt (10, 40).

7. Bearing arrangement according to Claim 1, **characterized in that** at least one of the rolling bearings is sealed off on a side pointing axially away from the other of the rolling bearings.

8. Bearing arrangement according to Claim 1, **characterized in that** the bolt (10, 29, 40) is surrounded at least at one end by a sleeve (23, 45).

9. Bearing arrangement according to Claim 8, **characterized in that** the sleeve (23) is arranged in a receptacle (9) for the bolt (10, 29) in the housing (7) radially at least partially between the bolt (10, 29) and the housing (7), so that the bolt (10, 29) is supported at least radially via the sleeve (23) in the housing (7).

10. Bearing arrangement according to Claim 8, **characterized in that** the sleeve (23, 45) is of cap-like design with a bottom (30, 47) and is slipped over one end of the bolt (10, 29, 40), the bottom (30, 47) covering the bolt (10, 29, 40) axially on the end face.

11. Bearing arrangement according to Claim 8, **characterized in that** the radially oriented outside diameter of the sleeve (23, 45) is greater than any maximum codirectional outside diameter of the bolt (10, 29, 40).

12. Bearing arrangement according to Claim 1, **characterized in that** the bolt (10, 29, 40) is inserted axially, at least with one axial end, in a hole (8, 31, 42) of the housing (7, 26, 43).

13. Bearing arrangement according to Claim 12, **characterized in that** the bolt (10, 29, 40) is pressed into the hole (8, 31, 42).

14. Bearing arrangement according to Claim 12, **characterized in that** the bolt (10) is supported, with another end remote from the hole (8), in an at least partially slot-shaped receptacle (9), at least in two radial directions opposite to one another, the dimension of the receptacle (9) in the opposite directions coinciding in nominal size with the codirectional radial dimension of the end supported in the receptacle (9).

15. Bearing arrangement according to Claim 13, **characterized in that** the radial dimension of the receptacle transversely to the radial directions in which the bolt (10) is supported in the receptacle is greater than the radial dimension of the receptacle in the radial directions opposite to one another in which the bolt (10) is supported.

16. Bearing arrangement according to Claim 12, **characterized in that** the bolt (10, 29) is surrounded at least at one end by a sleeve, the sleeve being arranged in a slot-shaped receptacle of the bolt (10, 29) in the housing radially at least partially between the bolt (10, 29) and the housing, so that the bolt (10, 29) is supported at least radially via the sleeve in the housing, the dimension of the receptacle in the radial directions opposite to one another coinciding in nominal size with the outside diameter of the sleeve.

17. Bearing arrangement according to Claim 1, **characterized in that** the rolling bearings are received in an enclosure (4, 27, 46) of hub-like design, the enclosure being connected to the additional mass (2, 19, 25, 38) by means of at least one cantilever.

18. Bearing arrangement according to Claim 17, **characterized in that** the enclosure (27) is of two-part design, in each case one of the rolling bearings (28) being received in an internally hollow-cylindrical separate portion of the enclosure.

## Revendications

1. Masse supplémentaire pivotante et système de palier (1, 24, 37) pour le support de la masse supplémentaire pivotante (2, 19, 25, 38) sur un boîtier (7, 26, 43), la masse supplémentaire (2, 19, 25, 38) étant montée au moyen d'au moins deux paliers radiaux (6, 28, 41) sur un goujon (10, 29, 40) de manière à pouvoir pivoter autour de l'axe médian (35) à l'encontre de composantes de force radiale orientées perpendiculairement à l'axe médian (35) du goujon (10, 29, 40), et les paliers radiaux (6, 28, 41) étant ainsi reçus dans la masse supplémentaire (2, 19, 25, 38) de telle sorte que le centre de gravité de la masse supplémentaire (2, 19, 25, 38) soit radialement éloigné de l'axe médian (35) du goujon (10, 29, 40), et la masse supplémentaire (2, 19, 25, 38) étant supportée au moyen d'au moins un support axial (11) par rapport au boîtier (7, 26, 43), et le support axial (11) recevant ainsi des composantes de force axiale, qui sont orientées dans le même sens que l'axe médian (35), **caractérisés en ce que** les paliers radiaux (6, 28, 41) sont réalisés sous forme de paliers à roulement, **en ce que** le support axial (11) se raccorde axialement entre les paliers radiaux (6, 28, 41) aux palier radiaux (6, 28, 41), et **en ce que** la masse supplémentaire est supportée axialement sur le support axial (11) par le biais des bords latéraux de l'un respectif des paliers radiaux et sur le boîtier (7, 26, 43) par le biais du support axial (11) supporté sur le goujon (10, 29, 40) et par le biais du goujon (10, 29, 40) supporté sur le boîtier (7, 26, 43).

2. Système de palier selon la revendication 1, **caractérisé en ce que** les paliers à roulement sont des paliers à aiguilles (12, 32, 44).

3. Système de palier selon la revendication 1, **caractérisé en ce que** le support axial (11) est réalisé d'une seule pièce avec le goujon (29).

4. Système de palier selon la revendication 3, **caractérisé en ce que** le support axial (11) est un épaulement d'arbre (34) avec au moins un flanc de l'épaulement d'arbre (34) tourné dans la direction axiale, le palier radial (28) étant supporté sur le flanc.

5. Système de palier selon la revendication 1, **caractérisé en ce que** le support axial (11) est fixé sur le goujon (10, 40).

6. Système de palier selon la revendication 5, **caractérisé en ce que** le support axial (11) est une bague de fixation (17), la bague de fixation (17) venant en prise dans une rainure annulaire dans le goujon (10, 40).

7. Système de palier selon la revendication 1, **caractérisé en ce qu'**au moins l'un des paliers à roulement est étanchéifié sur un côté opposé axialement à l'autre des paliers à roulement.

8. Système de palier selon la revendication 1, **caractérisé en ce que** le goujon (10, 29, 40) est en prise au moins à une extrémité avec une douille l'entourant (23, 45).

9. Système de palier selon la revendication 8, **caractérisé en ce que** la douille (23) est disposée dans un logement (9) pour le goujon (10, 29) dans le boîtier (7), radialement au moins en partie entre le goujon (10, 29) et le boîtier (7), de sorte que le goujon (10, 29) soit supporté au moins radialement par le biais de la douille (23) dans le boîtier (7).

10. Système de palier selon la revendication 8, **caractérisé en ce que** la douille (23, 45) est réalisée en forme de capuchon avec un fond (30, 47) et est enfoncée par-dessus une extrémité du goujon (10, 29, 40), le fond (30, 47) recouvrant axialement l'extrémité du goujon (10, 29, 40).

11. Système de palier selon la revendication 8, **caractérisé en ce que** le diamètre extérieur orienté radialement de la douille (23, 45) est supérieur à un diamètre extérieur quelconque maximum du goujon (10, 29, 40) orienté dans le même sens.

12. Système de palier selon la revendication 1, **caractérisé en ce que** le goujon (10, 29, 40) est enfiché au moins avec une extrémité axiale axialement dans un trou (8, 31, 42) du boîtier (7, 26, 43).

13. Système de palier selon la revendication 12, **caractérisé en ce que** le goujon (10, 29, 40) est pressé à l'intérieur du trou (8, 31, 42).

14. Système de palier selon la revendication 12, **caractérisé en ce que** le goujon (10) est supporté par une autre extrémité éloignée du trou (8) dans un logement (9) réalisé au moins en forme de fente partielle, au moins dans deux directions radiales opposées, la dimension du logement (9) dans les directions opposées coïncidant avec la dimension radiale dans le même sens de l'extrémité supportée dans le logement (9), en termes de cote nominale.

15. Système de palier selon la revendication 13, **caractérisé en ce que** la dimension radiale du logement transversalement aux directions radiales, dans lesquelles le goujon (10) est supporté dans le logement, est supérieure à la dimension radiale du logement dans les directions radiales opposées, dans lesquelles le goujon (10) est supporté.

16. Système de palier selon la revendication 12, **caractérisé en ce que** le goujon (10, 29) est en prise au moins à une extrémité avec une douille l'entourant, la douille étant disposée dans un logement du goujon (10, 29) réalisé en forme de fente dans le boîtier radialement au moins en partie entre le goujon (10, 29) et le boîtier, de sorte que le goujon (10, 29) soit supporté dans le boîtier au moins radialement par le biais de la douille, la dimension du logement dans les directions radiales opposées coïncidant avec le diamètre extérieur de la douille, en termes de cote nominale.

17. Système de palier selon la revendication 1, **caractérisé en ce que** les paliers à roulement sont reçus dans un habillage 4, 27, 46 réalisé sous forme de moyeu, l'habillage étant relié à la masse supplémentaire (2, 19, 25, 38) avec au moins un bras.

18. Système de palier selon la revendication 17, **caractérisé en ce que** l'habillage (27) est réalisé en deux parties, l'un des paliers à roulement (28) étant à chaque fois reçu dans une portion séparée interne cylindrique creuse de l'habillage.
